## Europäisches Patentamt

## European Patent Office

## Office européen des brevets

(19)

(11) Veröffentlichungsnummer: **0 045 297
B1**

(12) **EUROPÄISCHE PATENTSCHRIFT**

(45) Veröffentlichungstag der Patentschrift:
10.07.85

(51) Int. Cl.⁴: **C 04 B 14/10, C 04 B 18/18,
C 04 B 20/04**

(21) Anmeldenummer: **81890120.9**

(22) Anmeldetag: **17.07.81**

(54) Verfahren zur Herstellung eines Betonzuschlagstoffes.

(30) Priorität: **17.07.80 AT 3728/80**

(43) Veröffentlichungstag der Anmeldung:
**03.02.82 Patentblatt 82/5**

(45) Bekanntmachung des Hinweises auf die Patenterteilung:
**10.07.85 Patentblatt 85/28**

(84) Benannte Vertragsstaaten:
**BE CH DE FR GB IT LI LU NL SE**

(56) Entgegenhaltungen:
**DE - A - 1 571 604
DE - A - 1 964 000
DE - A - 2 012 666
DE - A - 2 014 948
DE - A - 2 243 815
DE - A - 2 543 944
DE - A - 2 549 118
DE - A - 2 844 749**

(73) Patentinhaber: **WIENERBERGER
BAUSTOFFINDUSTRIE AKTIENGESELLSCHAFT,
Wienerbergstrasse 11, A-1100 Wien (AT)**

(72) Erfinder: **Kirnbauer, Peter, Ing., Am Platengrund 4 f,
A-2345 Brunn am Gebirge (AT)**

(74) Vertreter: **Binder, Otto, Dipl.-Ing., Stallburggasse 2,
A-1010 Wien (AT)**

## Beschreibung

Die Erfindung betrifft ein Verfahren zur Herstellung eines Betonzuschlagstoffes, wobei zumindest teilweise aus einem durch Hitze vergasbaren, verbrennbaren oder schrumpfbaren, vorzugsweise organischen Material bestehende Teilchen mit einem keramischen Rohmaterial, wie Ton, vermengt bzw. beschichtet und sodann einer Erhitzung unterzogen werden, bei der der Ton-Anteil erhärtet und der nicht hitzebeständige Anteil der Teilchen sich verflüchtigt bzw. schrumpft.

Ein solches Verfahren ist in der DE-A-1 945 883 beschrieben; diesem vorbekannten Verfahren zufolge werden aus Polystyrol od. dgl. bestehende Schaumstoffteilchen mit Ton und Wasser vermischt, dieses Gemenge wird in einer Spinndüse geformt und in Stücke geschnitten. Diese zylindrischen oder prismatischen Stücke werden gebrannt, wobei sie eine Vielzahl von Hohlräumen bekommen, die durch Vergasung der Schaumstoffteilchen entstehen. Die porösen Profilkörper sind dann als Zuschlagstoff für Beton verwendbar, sie können allerdings nur als verhältnismäßig grobkörniger Zuschlagstoff Verwendung finden.

Aus der DE-A-1 571 604 ist ferner die Herstellung eines aus Blähton bestehenden leichten Betonzuschlagstoffes bekannt, demzufolge ein aus Ton und z. B. Braunkohlenstaub als verbrennbares Material bestehendes Gemenge zu einem Granulat verarbeitet und anschließend bei Temperaturen oberhalb 1000° C gebrannt wird. Bevorzugt wird die Verwendung von Kohleteilchen mit einem Durchmesser von etwa 100 Mikrometer.

Ferner ist aus der DE-A-2 543 944 ein Verfahren zur Herstellung eines porösen keramischen Leichtbaustoffes unter Verwendung eines keramischen Rohstoffes und eines ausbrennbaren Porenbildners bekannt, der aus einem sprühgetrockneten Zellulose-Abfall besteht, bevorzugt aus Teilchen mit einem Durchmesser von 50 bis 500 Mikrometer.

Ebenso wird in der DE-A-2 549 118 die Verwendung von Papierschlamm als Porenbildner bei der Herstellung leichter keramischer Ziegel beschrieben.

Aufgabe der Erfindung ist es von diesen vorbekannten Verfahren ausgehend, die Verarbeitung noch kleinerer Teilchen zur Herstellung eines Betonzuschlagstoffes zu ermöglichen, so daß dieser Zuschlagstoff bei einem Leichtbeton den bisher erforderlichen Feinsand-Anteil zu ersetzen vermag, wobei er sich bei vergeichsweise hoher Festigkeit durch ein geringes Gewicht und gute Wärmedämmfähigkeit, d. h. durch einen ausreichend hohen Hohlraumanteil, auszeichnet, sich infolge der Größenordnung seiner Teilchen mit einem hydraulischen Bindemittel gut mischen läßt und mit einem solchen Bindemittel ein besonders dichtes Gefüge bildet.

Darüber hinaus ist es ein Ziel der Erfindung, einen Betonzuschlagstoff zu schaffen, bei dessen Herstellung weitgehend Materialien Verwendung finden können, die als Abfall, insbesondere als industrieller Abfall, oder auch bei der Müllaufbereitung bzw. Abwasserreinigung anfallen und die bisher die Umwelt erheblich belasteten bzw. für deren Deponierung, Beseitigung und Unschädlichmachung ein erheblicher Kostenaufwand erforderlich war. Die Erfindung soll demnach unter anderem eine umweltfreundliche und wirtschaftliche Verwertung solcher bisher ungenutzter Abfallstoffe ermöglichen.

Gemäß dem wesentlichsten Erfindungsmerkmal ist bei einem Verfahren der eingangs bezeichneten Gattung vorgesehen, daß Teilchen einer Größe unterhalb 60 Mikrometer, vorzugsweise einer Größe von 0 bis 20 Mikrometer, zunächst in einer Flüssigkeit dispergiert, mit dem vorzugsweise gleichfalls flüssig aufbereiteten Ton zu einer Schlämme vermengt werden und dieser Schlamm zur Herstellung eines trockenen Granulates, vorzugsweise in einem Fließbett-Trockner, unter Heißluftzufuhr versprüht und bei einer oberhalb 700° C, vorzugsweise oberhalb 1000° C, jedoch unterhalb der Sintertemperatur gelegenen Temperatur erhitzt wird.

Die Erfindung beruht demnach auf der Erkenntnis, daß überraschenderweise selbst kleinste Teilchen, wie Zellstoffasern, dazu geeignet sind, vorübergehend, nämlich bis zu ihrer Verflüchtigung beim Brennen des Tons, den Träger des Tonmateriales zu verkörpern, und daß sich infolgedessen mit Hilfe solcher kleinster Teilchen ein Zuschlagstoff schaffen läßt, der bisher bei der Herstellung hochwertigen Leichtbetons echt gefehlt hat, nämlich gewissermaßen ein poröser Feinsand.

Im Endprodukt verleiht der erhärtete Ton-Anteil den Teilchen ein außerordentlich festes Gefüge mit einem wünschenswert hohen Hohlraumanteil. Im Gegensatz zu dem häufig als Zuschlagstoff verwendeten Blähton sind jedoch die Abmessungen der Teilchen des erfindungsgemäßen Endproduktes gering und diese Teilchen können eine weitgehend einheitliche Größe oder auch eine bestimmte Kornverteilung aufweisen, die durch Wahl und Einstellung verschiedener Parameter im Verlauf des Herstellungsverfahrens unschwer ziemlich genau vorbestimmt werden kann.

Die Teilchen des Ausgangsmateriales bestehen vorteilhafterweise zumindest teilweise aus Zellstoff, Holzmehl, Kunststoff, Wachs, tierischen oder pflanzlichen Fasern, Müllbestandteilen, Textil- oder Papierabfällen u. dgl.

Dies ergibt den Vorteil, daß solche Teilchen aus einem bei der industriellen Fertigung, z. B. bei der Zellstoff- oder Papierherstellung bzw. -verarbeitung anfallenden Abfall gewonnen werden können, aber auch durch Reinigung eines durch solche Teilchen verunreinigten Gas- oder Flüssigkeitsstromes, z. B. einer Wasch- oder Flotationsflüssigkeit, eines Abwassers od. dgl. Die Reinigung solcher Flüssigkeiten oder Gase stößt bekanntlich insbesondere dann auf große Schwierigkeiten, wenn die verunreinigenden Teilchen einer besonders kleinen Größenordnung angehören; die vorliegende Erfindung erschließt erstmals die Möglichkeit einer Verwertung solcher in Flüssigkeiten dispergierter oder in Gasströmen mitgeführter Feinstteilchen.

Verwertbar sind ferner im Rahmen der Erfindung vorteilhaft auch Teilchen, die bei der Sortierung von kommunalem Müll anfallen.

Unter diesem Aspekt betrachtet dient die Erfindung somit einer weltweit anzustrebenden Entlastung der Umwelt von solchen kommunalen oder industriellen Abfällen, deren Beseitigung bisher besonders schwer zu bewältigen war und die nun erfindungsgemäß einer wirtschaftlich günstigen Verwertung zugeführt werden können.

Selbstverständlich könnte man im Rahmen der Erfindung die Teilchen des Ausgangsmateriales auch künstlich anfertigen bzw. gewinnen, beispielsweise durch ein Versprühen von flüssigem oder teigigem Material, wie Kunststoff oder Paraffin, zu Tröpfchen, durch Vermahlen von Feststoffen, wie etwa Holzabfällen, insbesondere der bisher kaum verwerteten Baumrinde od. dgl.

Erfindungsgemäß werden die Teilchen in einer Flüssigkeit dispergiert mit dem vorzugsweise gleichfalls flüssig aufbereiteten Tonmaterial zu einer Schlämme vermengt.

Es hat sich hierbei als vorteilhaft erwiesen, der aus den Teilchen des Ausgangsmateriales und aus dem Tonmaterial bestehenden Schlämme Flockungsmittel, wie etwa Polyacrylamide, hinzuzufügen, um für die weitere Verarbeitung eine bessere Abwassertrennung zu erreichen.

Zweckdienlicherweise wird die aus den Teilchen des Ausgangsmateriales und aus dem Tonmaterial bestehende Schlämme vor dem Erhitzen und Brennen zur Bildung eines teigigen Kuchens weitgehend entwässert, z. B. zentrifugiert. Diesem wasserarmen Kuchen können dann der Verflüssigung des Materiales dienende Zusätze, wie z. B. Soda, Wasserglas, Natriumpyrophosphat usw., hinzugefügt werden, wobei sich dadurch lediglich die Verarbeitbarkeit des Materiales bessert, der — wünschenswert gering zu haltende — Wassergehalt jedoch unverändert bleibt.

Zur Herstellung eines trockenen Granulates, also des Endproduktes, wird dann eine solche Schlämme aus mit Ton vermischten und beschichteten Teilchen versprüht, und zwar vorteilhafterweise in einem Fließbetttrockner unter Heißluftzufuhr.

Ausführungsbeispiele des erfindungsgemäßen Verfahrens werden nachfolgend geschildert:

### Beispiel 1

Als Ausgangsmaterial dient die bei der Herstellung von Zellstoff anfallende Nullfasersuspension, deren faserförmige Feinstteilchen aus Zellstoff und Hämizellulosen bestehen, die eine durchschnittliche Länge von ca. 60 μm und eine Dicke von ca. 5 bis 20 μm aufweisen. Die Konzentration der Feinstteilchen in dieser wäßrigen Dispersion betrug etwa 1 bis 2%.

Diese Dispersion wurde mit flüssig aufbereitetem Tonmaterial einer feuerfesten Charakteristik, u. zw. mit einem Ton bestehend aus etwa 60 Gew.-% $SiO_2$, 30 Gew.-% $Al_2O_3$, bis 1 Gew.-% $Fe_2O_3$, Restalkalien und Glühverlust vermengt und homogenisiert. Dem dadurch gewonnenen Schlamm wurde als Flockungsmittel ein Anteil von etwa 100 g/tatro Polyacrylamid hinzugefügt und dieser Schlamm wurde sodann durch Zentrifugieren weitgehend, nämlich bis zu einem Wassergehalt von etwa 50% entwässert.

Dem auf diese Weise gebildeten Kuchen wurde als ein der Verflüssigung dienender Zusatz ein Anteil von etwa 0,3 Gew.-% Natriumpyrophosphat hinzugefügt. Man erhielt dadurch eine Schlämme, die sich oberhalb eines mit Heißluft beschickten Fließbettes zu einem aus mit Ton vermischten bzw. beschichteten Teilchen bestehenden Granulat versprühen ließ.

Dieses Endprodukt bestand also aus einem homogenen Pulver, dessen Teilchen eine durchschnittliche Größe von 0 bis 2 mm besaßen, wobei in jedem Teilchen mindestens ein, meist jedoch eine Vielzahl von Hohlräumen enthalten war, die sich durch das Verbrennen (Oxydieren) der im Ton enthaltenen, aus dem organischen Material bestehenden Teilchen während des abschließenden Erhitzens auf eine Temperatur von etwa 1200°C ergaben.

### Beispiel 2

Paraffin wurde geschmolzen und in einem Sprühkühler zu Mikrokugeln versprüht. Die so gewonnenen Kügelchen wurden mit einer Tonsuspension gemäß Beispiel 1 mit etwa 70 Gew.-% Ton und 30 Gew.-% Wasser vermischt, so daß auf atro Ton bezogen etwa 50 bis 70% Mikrokugeln in der Mischung enthalten waren. Diese Mischung wurde dann gemäß Beispiel 1 im Fließbett weiterbehandelt.

### Beispiel 3

Anstelle der Paraffinkügelchen wurden Mikrokugeln aus Polystyrol od. dgl. Kunststoff verwendet.

### Beispiel 4

Holzrindenabfall der Zellstoff- bzw. Papierindustrie wurde tiefgefroren feucht oder getrocknet bei Raumtemperatur feinst vermahlen und dann mit einer Tonsuspension gemäß Beispiel 1 weiterverarbeitet.

### Beispiel 5

Die bei der Papiererzeugung vom Sieb der Papiermaschine anfallenden Feinstfasern, die vom Sieb nicht mehr gehalten werden können, wurden aus dem Unterwasser durch Zugabe von Feuerfestton und anschließendes Ausflocken des Ton-Faser-Gemisches entfernt, der Ton-Faser-Brei wurde anschließend wie oben behandelt.

Im Verlauf der verschiedenen Versuche hat sich übrigens gezeigt, daß es möglich ist. die Ausbildung der Poren durch Zusatz von Schäumungsmitteln und eines Stabilisators zum Tonschlicker sowie durch anschließendes Einbringen von Luft, z. B. durch Schlagen, Rühren, Einblasen u. dgl., zu begünstigen und dadurch das Porenvolumen dauerhafter zu gestalten.

## Patentansprüche

1. Verfahren zur Herstellung eines Betonzuschlagstoffes, wobei zumindest teilweise aus einem durch Hitze vergasbaren, verbrennbaren oder schrumpfbaren, vorzugsweise organischen Material bestehende Teilchen mit einem keramischen Rohmaterial, wie Ton, vermengt bzw. beschichtet und sodann einer Erhitzung unterzogen werden, bei der der Ton-Anteil erhärtet und der nicht hitzebeständige Anteil der Teilchen sich verflüchtigt bzw. schrumpft, dadurch gekennzeichnet, daß Teilchen einer Größe unterhalb 60 Mikrometer, vorzugsweise einer Größe von 0 bis 20 Mikrometer, zunächst in einer Flüssigkeit dispergiert, mit dem vorzugsweise gleichfalls flüssig aufbereiteten Ton zu einer Schlämme vermengt werden und dieser Schlamm zur Herstellung eines trockenen Granulates, vorzugsweise in einem Fließbett-Trockner, unter Heißluftzufuhr versprüht und bei einer oberhalb 700° C, vorzugsweise oberhalb 1000° C, jedoch unterhalb der Sintertemperatur gelegenen Temperatur erhitzt wird.

2. Verfahren nach Anspruch 1, dadurch gekennzeichnet, daß die Teilchen aus einem bei einer industriellen Fertigung, z. B. bei der Zellstoff- oder Papierherstellung bzw. -verarbeitung anfallenden Abfall gewonnen werden.

3. Verfahren nach Anspruch 1, dadurch gekennzeichnet, daß die Teilchen durch Reinigung eines durch diese Teilchen verunreinigten Flüssigkeits- oder Gasstromes, z. B. einer Waschflüssigkeit oder aus Abwasser, gewonnen werden.

4. Verfahren nach Anspruch 1, dadurch gekennzeichnet, daß die Teilchen bei der Sortierung von kommunalem Müll gewonnen werden.

5. Verfahren nach Anspruch 1, dadurch gekennzeichnet, daß die Teilchen durch Versprühen von flüssigem oder teigigem erhärtendem Material, wie Kunststoff, durch Vermahlen von Feststoffen, wie Holz, Rinde od. dgl., oder durch andere an sich zur Granulierung von Material bekannte Verfahren künstlich angefertigt werden.

6. Verfahren nach einem der Ansprüche 1 bis 5, dadurch gekennzeichnet, daß der aus den Teilchen und dem Tonmaterial bestehenden Schlämme Flockungsmittel, wie Polyacrylamide od. dgl., hinzugefügt werden.

7. Verfahren nach einem der Ansprüche 1 bis 6, dadurch gekennzeichnet, daß die aus den Teilchen und dem Tonmaterial bestehende Schlämme zur Bildung eines teigigen Kuchens weitgehend entwässert wird.

8. Verfahren nach Anspruch 7, dadurch gekennzeichnet, daß dem Kuchen der Verflüssigung des Materials dienende Zusätze, wie Soda, Wasserglas, Natriumpyrophosphat u. dgl., vorzugsweise als wäßrige Lösung, hinzugefügt werden.

## Claims

1. A method for the production of a concrete aggregate material, wherein particles consisting at least partially of a preferably organic material which may be gasified, comusted or shrunk by heat are mixed or coated with a ceramic raw material, such as clay, and are then subjected to heating, during which the clay component hardens and the component of the particles which is not heat-resistant evaporates or shrinks, characterised in that particles having a size of less than 60 micrometers, preferably a size of 0 to 20 micrometers, are firstly dispersed in a fluid, are mixed with the clay which is preferably also prepared in fluid form to make a sludge, this sludge being sprayed to form a dry granulate, preferably in a fluid bed drier with the supply of hot air and heated to a temperature of more than 700° C, preferably more than 1000° C, provided that this temperature is below the sintering temperature.

2. A method as claimed in claim 1, characterised in that the particles are obtained from the waste produced during an industrial production process, for example during cellulose or paper manufacture or processing.

3. A method as claimed in claim 1, characterised in that the particles are obtained by cleaning of a fluid or gas stream contaminated by these particles, for example a washing fluid or waste water.

4. A method as claimed in claim 1, characterised in that the particles are obtained by sorting domestic refuse.

5. A method as claimed in claim 1, characterised in that the particles may be artificially prepared by spraying with fluid or pasty hardening material, such as plastics, by crushing of solids, such as wood, bark or the like, or by other methods known per se for the granulation of materials.

6. A method as claimed in one of claims 1 to 5, characterised in that flocculation agents, such as polyacrylamide or the like are added to the sludge consisting of the particles and the clay material.

7. A method as claimed in one of claims 1 to 6, characterised in that the sludge consisting of the particles and the clay material is substantially dehydrated so as to form a pasty cake.

8. A method as claimed in claim 7, characterised in that additives such as soda, water glass, sodium pyrophosphate and the like are added to the cake for liquefying the material, these additives preferably being in the form of aqueous solutions.

## Revendications

1. — Procédé de préparation d'un agrégat pour béton dans lequel on mélange des particules consistant en partie au moins en une matière gazéifiable, combustible ou rétractable à la chaleur, de préférence organique, avec une matière première céramique telle qu'une argile, ou bien on revêt ces particules d'une telle matière puis on soumet à un chauffage dans lequel la partie argile durcit et la fraction des particules instable à la chaleur se volatilise ou se rétracte, caractérisé en ce que l'on disperse d'abord des particules d'une dimension inférieure à 60 microns, de préférence d'une dimension de 0 à 20 microns, dans un liquide, on forme une boue en mélangeant avec l'argile de préférence mise également à l'état de liquide et on pulvérise cette boue pour préparer des granules secs, de préférence dans un séchoir à lit fluidisé, avec apport d'air chaud, et on chaffe à une température supérieure à 700°C, de préférence supérieure à 1000°C mais inférieure à la température de frittage.

2. — Procédé selon la revendication 1, caractérisé en ce que les particules sont obtenues à partir de déchets d'une fabrication industrielle, par exemple de la fabrication ou des traitements industriels de la cellulose ou du papier.

3. — Procédé selon la revendication 1, caractérisé en ce que les particules sont obtenues par épuration d'un courant de liquide ou de gaz dont elles constituaient des impuretés, par exemple un liquide de lavage, ou à partir d'eaux résiduaires.

4. — Procédé selon la revendication 1, caractérisé en ce que les particules sont obtenues au triage d'ordures municipales.

5. — Procédé selon la revendication 1, caractérisé en ce que les particules sont obtenues artificiellement par pulvérisation de matière liquide ou pâteuse durcissable telle qu'une résine synthétique, par broyage de matières solides telle que du bois, de l'écorce ou des matières analogues, ou par d'autres techniques connues en soi pour la granulation de matières.

6. — Procédé selon l'une des revendications 1 à 5, caractérisé en ce que l'on ajoute des agents floculants tels que des polyacrylamides ou des matières analogues à la boue consistant en les particules et la matière argileuse.

7. — Procédé selon l'une des revendications 1 à 6, caractérisé en ce que l'on déshydrate fortement la boue consistant en les particules et la matière argileuse pour former un gâteau pâteux.

8. — Procédé selon la revendication 7, caractérisé en ce que l'on ajoute au gâteau des additifs servant à fluidifier la matière tels que du carbonate de sodium, du silicate de sodium, du pyrophosphate de sodium ou une matière analogue, de préférence à l'état de solution aqueuse.